(19)

**Europäisches Patentamt**
**European Patent Office**
**Office européen des brevets**

(11) **EP 4 571 105 A1**

(12) **EUROPEAN PATENT APPLICATION**
published in accordance with Art. 153(4) EPC

(43) Date of publication:
**18.06.2025 Bulletin 2025/25**

(51) International Patent Classification (IPC):
*F03D 17/00* *(2016.01)*

(21) Application number: **23909149.9**

(52) Cooperative Patent Classification (CPC):
Y02E 10/72

(22) Date of filing: **27.07.2023**

(86) International application number:
**PCT/CN2023/109556**

(87) International publication number:
**WO 2024/139207 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.12.2022  CN 202211734407**

(71) Applicant: **Beijing Goldwind Science & Creation Windpower Equipment Co. Ltd.**
**Beijing 100176 (CN)**

(72) Inventors:
• **SU, Suping**
  **Beijing 100176 (CN)**
• **ZHANG, Wenlei**
  **Beijing 100176 (CN)**
• **LI, Jiaying**
  **Beijing 100176 (CN)**
• **FANG, Haitao**
  **Beijing 100176 (CN)**

(74) Representative: **Hoffmann Eitle**
**Patent- und Rechtsanwälte PartmbB**
**Arabellastraße 30**
**81925 München (DE)**

(54) **CLEARANCE ABNORMALITY DETECTION METHOD AND APPARATUS FOR WIND TURBINE GENERATOR SET**

(57)    A clearance abnormality detection method for a wind turbine generator set. The method comprises: acquiring, from operation data of a generator set within a predetermined period of time, operation data of when an air speed is within a predetermined air speed range and a power is within a predetermined power range, and dividing the operation data into a plurality of operation data fragments; with regard to each operation data fragment, when a first specified clearance value therein is less than a first preset value and the operation data fragment meets a preset condition, determining the operation data fragment to be a clearance-abnormal fragment; and determining a clearance abnormality of the generator set according to the clearance-abnormal fragment. Further comprised are a clearance abnormality detection apparatus for a wind turbine generator set, and a medium, a system and a wind turbine generator set. The method can effectively solve the problem of it being impossible to predict a clearance risk of a wind turbine generator set in advance.

Acquire operation data of a wind turbine within a predetermined time period — S101

Acquire, from the operation data, first operation data when a wind speed is within a predetermined wind speed range and a power is within a predetermined power range — S102

Divide the first operation data into multiple operation data segments — S103

For each operation data segment of the multiple operation data segments, in response to a first specified clearance value in the operation data segment being less than a first preset value and the operation data segment meeting a preset condition, determine the operation data segment to be a clearance-abnormal segment, where the preset condition is associated with the number of pieces of operation data with a clearance value less than the first preset value in the operation data segment — S104

Determine a clearance abnormality of the wind turbine based on the clearance-abnormal segment — S105

**FIG. 1**

## Description

### CROSS REFERENCE OF RELATED APPLICATION

The present application claims priority to Chinese Patent Application No.202211734407.8, titled "CLEARANCE ABNORMALITY DETECTION METHOD AND APPARATUS FOR WIND TURBINE GENERATOR SET", filed on December 30, 2022 with the China National Intellectual Property Administration, which is hereby incorporated by reference in its entirety.

### FIELD

The present disclosure relates generally to the technical field of wind power generation, and more specifically, to a method and an apparatus for detecting a clearance abnormality of a wind turbine.

### BACKGROUND

The lightweight design of blades is an effective measure to reduce the cost of the blades, which results in stiffness decrease and may cause clearance to fail to meet standards, thereby increasing a risk of blade striking tower. Moreover, wind conditions of some wind farms are complicated, and an operation state of blades is difficult to determine, resulting in frequent blade striking tower of in-service wind turbines and a large number of wind turbines with a potential risk of tower-striking. Based on the above safety risks, some wind turbines, especially wind turbines with large impellers and wind turbines located in complicated terrain are provided with a tower clearance monitoring device, so as to ensure normal operation of wind turbines and avoid the event of blade striking tower.

At present, clearance abnormality detection for the wind turbine generally performed based on real-time clearance values monitored by the clearance monitoring device, which is mainly used to protect the control safety of the wind turbine. The solution focuses on the real-time detection for the wind turbine, failing to predict a clearance risk of the wind turbine.

### SUMMARY

According to embodiments of the present disclosure, a method and an apparatus for detecting a clearance abnormality of a wind turbine are provided, to effectively solve the problem that the conventional technology fails to predict a clearance risk of the wind turbine.

In an aspect, a method for detecting a clearance abnormality of a wind turbine is provided. The method includes: acquiring operation data of the wind turbine within a predetermined time period; acquiring, from the operation data, first operation data when a wind speed is within a predetermined wind speed range and a power is within a predetermined power range; dividing the first operation data into multiple operation data segments; for each operation data segment of the multiple operation data segments, in response to a first specified clearance value in the operation data segment being less than a first preset value and the operation data segment meeting a preset condition, determining the operation data segment to be a clearance-abnormal segment, where the preset condition is associated with the number of pieces of operation data with a clearance value less than the first preset value in the operation data segment; and determining the clearance abnormality of the wind turbine based on the clearance-abnormal segment.

In another aspect, an apparatus for detecting a clearance abnormality of a wind turbine is provided. The apparatus includes a first acquisition unit, a second acquisition unit, a dividing unit, a first determination unit and a second determination unit. The first acquisition unit is configured to acquire operation data of the wind turbine within a predetermined time period. The second acquisition unit is configured to acquire, from the operation data, first operation data when a wind speed is within a predetermined wind speed range and a power is within a predetermined power range. The dividing unit is configured to divide the first operation data into multiple operation data segments. The first determination unit is configured to, for each operation data segment of the multiple operation data segments, in response to a first specified clearance value in the operation data segment being less than a first preset value and the operation data segment meeting a preset condition, determine the operation data segment to be a clearance-abnormal segment, where the preset condition is associated with the number of pieces of operation data with a clearance value less than the first preset value in the operation data segment. The second determination unit is configured to determine the clearance abnormality of the wind turbine based on the clearance-abnormal segment.

In another aspect, a computer-readable storage medium for storing instructions is provided. The instructions, when being executed by at least one computing apparatus, cause the at least one computing apparatus to perform any one method for detecting the clearance abnormality of the wind turbine.

In another aspect, a system, including at least one computing apparatus and at least one storage apparatus for storing instructions, is provided. The instructions, when being executed by the at least one computing apparatus, cause the at least one computing apparatus to perform any one method for detecting the clearance abnormality of the wind turbine.

In another aspect, a wind turbine is provided. The wind turbine includes the apparatus for detecting the clearance abnormality of the wind turbine described above.

According to the method and apparatus for detecting the clearance abnormality of the wind turbine described in the embodiments of the present disclosure, the operation data that meets the condition is divided, and the clearance-abnormal segment is determined by performing correlation analysis based on the clearance values in the divided operation data segments. It is determined whether the clearance of the wind turbine is abnormal based on the clearance-abnormal segment, so that a clearance risk of the wind turbine can be predicted when the clearance is abnormal rather than when a clearance risk occurs, thereby timely regulating the wind turbine in a case that the clearance of the wind turbine is abnormal to avoid the occurrence of tower-striking. Therefore, the problem that the conventional technology fails to predict the clearance risk of the wind turbine can be effectively solved according to the present disclosure.

Additional aspects and/or advantages of the overall concept of the present disclosure are partially explained in the following description. The other parts of the present disclosure will be clear through the description or can be learned through implementations of the overall concept of the present disclosure.

## BRIEF DESCRIPTION OF THE DRAWINGS

The above and other objectives and features of embodiments of the present disclosure will be more clarified in conjunction with the accompanying drawings. In the drawings:

FIG. 1 is a flowchart showing a method for detecting a clearance abnormality of a wind turbine according to one or more embodiments of the present disclosure;

FIG. 2 is a timing diagram showing a case from ten minutes before to ten minutes after a clearance-abnormal segment according to one or more embodiments of the present disclosure;

FIG. 3 is a flowchart showing a complete process of clearance abnormality detection according to one or more embodiments of the present disclosure;

FIG. 4 is a diagram showing a minimum clearance value curve, a maximum clearance value curve and a mean clearance value curve corresponding to various power groups according to one or more embodiments of the present disclosure;

FIG. 5 is a diagram showing a minimum clearance value curve, a maximum clearance value curve and a mean clearance value curve corresponding to various pitch angle groups according to one or more embodiments of the present disclosure;

FIG. 6 is a schematic diagram showing a minimum clearance curve according to one or more embodiments of the present disclosure;

FIG. 7 is a schematic diagram showing positions of wind turbines according to one or more embodiments of the present disclosure;

FIG. 8 is a schematic diagram showing a K-nearest neighbor distance of a wind turbine according to one or more embodiments of the present disclosure;

FIG. 9 is a schematic diagram showing a local accessible density of a wind turbine according to one or more embodiments of the present disclosure;

FIG. 10 is a schematic diagram showing a local outlier factor corresponding to a wind turbine according to one or more embodiments of the present disclosure;

FIG. 11 is a schematic diagram of a result of a local outlier factor according to one or more embodiments of the present disclosure;

FIG. 12 is a line graph of a result of a local outlier factor according to one or more embodiments of the present disclosure;

FIG. 13 is a flowchart of a complete process of outlier identification according to one or more embodiments of the present disclosure; and

FIG. 14 is a block diagram of an apparatus for detecting a clearance abnormality of a wind turbine according to one or more embodiments of the present disclosure.

## DETAILED DESCRIPTION

Specific embodiments are provided below to help readers to gain a comprehensive understanding of the method, device, and/or system described herein. After understanding the present disclosure, various changes, modifications, and equivalents of the method, device, and/or system described herein would be clear. For example, an order of operations described herein is only an example and is not limited to those described herein, but may be changed as would be clear after understanding the present disclosure, except for operations that must occur in a specific order. In addition, descriptions of features known in the art may be omitted for clarity and conciseness.

The features described herein may be implemented in different forms and should not be limited to the examples described herein. On the contrary, the examples described herein are provided to illustrate only some of feasible manners of implementing the method, device, and/or system described herein, and many other feasible manners would be clear after understanding the present disclosure.

As used herein, term "and/or" includes any one of listed items associated with the term, and any combination of any two or more of the items.

Although terms "first," "second," "third" and the like may be used herein to describe various members, components, regions, layers, or parts, these members, components, regions, layers, or parts should not be limited by these terms. On the contrary, these terms are only used to distinguish one member, component, region, layer, or part from another member, component, region, layer, or part. Therefore, without departing from the teachings of the examples, a first member, first component, first region, first layer, or first part referred to in the examples described herein may alternatively be referred to as a second member, second component, second region, second layer, or second part.

In the specification, an element (such as a layer, region, or substrate) described as being "on", "connected to", or "bonded to" another element may be directly "on", "connected to", or "bonded to" another element, or there may be one or more other elements between the two elements. On the contrary, when an element is described as "directly on" another element, "directly connected to" or "directly bonded to" another element, there may be no other elements between the two elements.

The terms used herein are only for describing various examples and are not intended to limit the present disclosure. Unless explicitly indicated in the context otherwise, a singular form is also intended to include a plural form. Terms "include," "comprise," and "have" indicate the existence of a mentioned feature, quantity, operation, component, element, and/or combination thereof, but do not exclude the existence or addition of one or more other features, quantities, operations, components, elements, and/or combinations thereof.

Unless defined otherwise, all terms used herein (including technical terms and scientific terms) have the same meanings as those commonly understood by those skilled in the art to which the present disclosure belongs upon the understanding of the present disclosure. Unless explicitly defined otherwise, terms (such as terms defined in a general dictionary) should be interpreted as having meanings consistent with their respective contexts in the relevant field and in the present disclosure, and should not be interpreted ideally or excessively formally.

In addition, in the description of the examples, the detailed description of well-known relevant structures or functions is omitted when it is believed that the detailed description may lead to ambiguity in the present disclosure.

According to the present disclosure, a method and an apparatus for detecting a clearance abnormality of a wind turbine are provided, thereby predicting a clearance risk of the wind turbine. For the wind turbine, the prediction of the clearance risk of the wind turbine according to the present disclosure may be applied to a server, or may be applied to a controller of a single wind turbine, and further applied to a primary controller of a wind farm, which is not limited by the present disclosure.

The server and controller are connected to the wind turbine via wireless or wired connection, which is not limited herein. The server may be a single server, a server cluster formed by multiple servers, a cloud computing platform, or a virtualization center. The server is taken as an example for illustration as follows.

The server acquires operation data of a wind turbine within a predetermined time period; acquires, from the operation data, first operation data when a wind speed is within a predetermined wind speed range and a power is within a predetermined power range; divides the first operation data into multiple operation data segments; for each operation data segment, in response to a first specified clearance value in the operation data segment being less than a first preset value and the operation data segment meeting a preset condition, determines the operation data segment to be a clearance-abnormal segment, where the preset condition is associated with the number of pieces of operation data with a clearance value less than the first preset value in the operation data segment; and determines the clearance abnormality of the wind turbine based on the clearance-abnormal segment, so that a clearance risk of the wind turbine can be predicted when the clearance is abnormal rather than when a clearance risk occurs, thereby timely regulating the wind turbine when the clearance of the wind turbine is abnormal to avoid the occurrence of tower-striking.

The method and apparatus for detecting the clearance abnormality of the wind turbine according to the present disclosure are described in detail in combination with the drawings as follows.

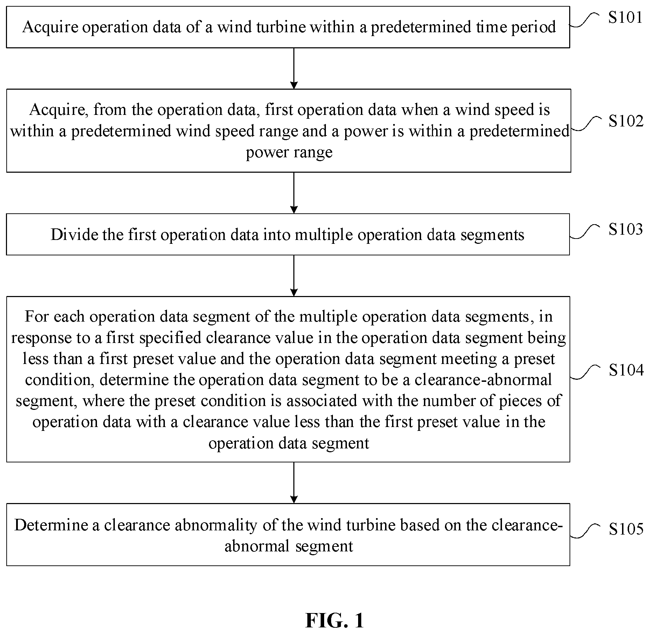

A method for detecting a clearance abnormality of a wind turbine is provided according to the present disclosure. FIG. 1 is a flowchart showing a method for detecting a clearance abnormality of a wind turbine according to one or more embodiments of the present disclosure. Referring to FIG. 1, the method for detecting the clearance abnormality of the wind turbine includes the following steps S101 to S105.

In step S101, operation data of the wind turbine within a predetermined time period is acquired. The predetermined time period in this step may be set as required, which is not limited in the present disclosure. The operation data in this step may include variables of the wind turbine such as a grid-side active power, a pitch angle of a blade, a clearance value, a wind speed, or may also include other data, which may be set as required and is not limited in the present disclosure. The power mentioned hereinafter in the present disclosure is the grid-side active power.

In step S102, first operation data is acquired from the operation data when a wind speed is within a predetermined wind speed range and a power is within a predetermined power range. The predetermined wind speed range in this step may be in the vicinity of a rated wind speed and the predetermined power range in this step may be in the vicinity of a rated power. For example, the predetermined wind speed range may be an interval from the rated wind speed*80% to the rated wind speed*110% (such as an interval from 8m/s to 13m/s), and the predetermined power range may be an interval from the rated power*80% to the rated power*110%. Alternatively, the predetermined wind speed range and the predetermined power range may also be another wind speed intervals and other power intervals. It should be noted that if the predetermined wind speed range is in the vicinity of the rated wind speed, the predetermined power range is also set to be in the vicinity of the rated power; and if the predetermined wind speed range is set to another wind speed interval, the predetermined power range also is also set to another power interval.

According to the embodiments of the present disclosure, before the acquiring, from the operation data, first operation data when a wind speed is within a predetermined wind speed range and a power is within a predetermined power range, the method for detecting the clearance abnormality further includes: performing power grouping on the operation data to allocate the operation data to multiple power intervals and acquiring a second specified clearance value of the operation data within each of the multiple power intervals; and in response to a ratio of the number of the power intervals within the predetermined power range with the second specified clearance value within a first predetermined range to the total number of the power intervals within the predetermined power range reaching a second predetermined ratio, determining a first clearance detection device flag bit to indicate that the clearance detection device is calibrated as normal. According to the embodiment, the correlation analysis is performed based on the variables such as the clearance value and the power, thereby conveniently and accurately determining whether the calibration of the clearance detection device is abnormal.

In an embodiment, if the predetermined wind speed range is in vicinity of the rated wind speed and the predetermined power range is in vicinity of the rated power, the second specified clearance value may be a maximum clearance value, or may be another specified clearance value, which is not limited in the present disclosure. The first predetermined range may be from 8m to 12m, or another range, which is not limited in the present disclosure. The second predetermined ratio may be 80% or another ratio, which is not limited in the present disclosure. For example, a case that the second specified clearance value is the maximum clearance value, the first predetermined range is from 8m to 12m, and the second predetermined ratio is equal to 80% is taken as an example, the grid-side powers of all operation data may be collected. The power grouping is performed on the operation data based on each power interval equal to 200KW of the grid-side power, multiple power intervals are obtained. Within the interval from the rated power*80% to the rated power*110% (that is, the predetermined power range), if the maximum clearance values of 80% of the power intervals range from 8m to 12m, a first clearance detection device flag bit outputs 1; otherwise, the first clearance detection device flag bit outputs 0.

In an embodiment of the present disclosure, before the acquiring, from the operation data, first operation data when a wind speed is within a predetermined wind speed range and a power is within a predetermined power range, the method for detecting the clearance abnormality further includes: performing angle grouping on the operation data to allocate the operation data to multiple pitch angle intervals and acquiring a second specified clearance value of the operation data within each of the multiple pitch angle intervals; and in response to a ratio of the number of the pitch angle intervals within a range from a minimum pitch angle to a predetermined angle with the second specified clearance value within a first predetermined range to the total number of the pitch angle intervals within the range from the minimum pitch angle to the predetermined angle reaching a second predetermined ratio, determining a second clearance detection device flag bit to indicate that the clearance detection device is calibrated as normal. According to the embodiment, correlation analysis is performed based on the variables such as the clearance value and the pitch angle, conveniently and accurately determining whether the calibration of the clearance detection device is abnormal.

In an embodiment, if the predetermined wind speed range is in vicinity of the rated wind speed and the predetermined power range is in vicinity of the rated power, the second specified clearance value may be a maximum clearance value, or may be another specified clearance value, which is not limited in the present disclosure. The first predetermined range may be from 8m to 12m, or another range, which is not limited in the present disclosure. The second predetermined ratio may be 80% or another ratio, which is not limited in the present disclosure. The predetermined angle may be set as required, and is generally greater than a grouping angle. For example, a case that the second specified clearance value is the maximum clearance value, the first predetermined range is from 8m to 12m, the second predetermined ratio is equal to 80% and the predetermined angle is equal to 5 degrees is taken as an example, the pitch angles of all operation data are collected. The pitch angle grouping is performed on the operation data based on each pitch angle interval equal to 1 degree of the pitch angle, multiple pitch angle intervals are obtained. Within the interval from a minimum pitch angle to 5 degrees, if maximum clearance values of 80% of the power intervals range from 8m to 12m, a second clearance detection device flag bit outputs 1; and otherwise, the second clearance detection device flag bit outputs 0.

In an embodiment of the present disclosure, it is determined that the clearance detection device is calibrated as normal in response to both the first clearance detection device flag bit and the second clearance detection device flag bit indicating that the clearance detection device is calibrated as normal. According to this embodiment, in a case that both the first clearance detection device flag bit and the second clearance detection device flag bit indicate that the clearance detection device is calibrated as normal, it is determined that the clearance detection device is calibrated as normal, thereby more accurately determining the calibration of the clearance detection device.

In an embodiment, when both the first clearance detection device flag bit and the second clearance detection device flag bit indicate that the clearance detection device is calibrated as normal, it is determined that the clearance detection device is calibrated as normal, that is, it is determined that the acquired operation data is valid. In this case, the first operation data of when the wind speed is within the predetermined wind speed range and the power is within the predetermined power range is acquired from the valid operation data.

In an embodiment of the present disclosure, the method for detecting the clearance abnormality further includes: acquiring, in response to a clearance detection device being calibrated as abnormal, the first specified clearance value of the operation data within each power interval; and in response to a ratio of the number of power intervals within a predetermined power range with the first specified clearance value within a second predetermined range to the total number of power intervals within the predetermined power range reaching a third predetermined ratio, determining a first clearance value flag bit to indicate that the clearance value is normal, and otherwise, determining that a low clearance risk of the wind turbine is predicted to occur and outputting a prompt message of immediately calibrating the clearance detection device. According to the embodiment, in a case that the clearance detection device is calibrated as abnormal, correlation analysis is performed based on the variables such as the clearance value and the power to determine whether the clearance value is apparently abnormal at this time. In response to the clearance value being apparently abnormal, the clearance detection device is calibrated immediately, facilitating rapidly acquiring the accurate clearance value and performing the clearance abnormality detection in time.

In an embodiment, if the predetermined wind speed range is in vicinity of the rated wind speed and the predetermined power range is in vicinity of the rated power, the first specified clearance value may be a minimum clearance value, or may be another specified clearance value, which is not limited in the present disclosure. The second predetermined range may be from 5m to 8m, or another range, which is not limited in the present disclosure. The third predetermined ratio may be equal to 80% or another ratio, which is not limited in the present disclosure. For example, a case that the first specified clearance value is the minimum clearance value, the second predetermined range is from 5m to 8m, and the third predetermined ratio is equal to 80% is taken as an example, the grid-side powers of all operation data may be collected. The power grouping is performed on the operation data based on each power interval equal to 200KW of the grid-side power, multiple power intervals are obtained. Within the interval from the rated power*80% to the rated power*110% (that is, the predetermined power range), if minimum clearance values of 80% of the power intervals range from 5m to 8m, a first clearance value flag bit outputs 1; and otherwise, the first clearance value flag bit outputs 0.

In an embodiment of the present disclosure, the method for detecting the clearance abnormality further includes: acquiring, in response to a clearance detection device being calibrated as abnormal, the first specified clearance value of the operation data within each pitch angle interval; and in response to a ratio of the number of the pitch angle intervals within a range from a minimum pitch angle to a predetermined angle with the first specified clearance value within a second predetermined range to the total number of the pitch angle intervals within the range from the minimum pitch angle to the predetermined angle reaching a third predetermined ratio, determining a second clearance value flag bit to indicate that the clearance value is normal, and otherwise, determining that a low clearance risk of the wind turbine is predicted to occur and outputting a prompt message of immediately calibrating the clearance detection device. According to the embodiment, in a case that the clearance detection device is calibrated as abnormal, correlation analysis is performed based on the variables such as the clearance value and the pitch angle to determine whether the clearance value is apparently abnormal. In response to the clearance value being apparently abnormal, the clearance detection device is calibrated immediately, facilitating accurately acquiring the accurate clearance value and performing the clearance abnormality detection in time.

In an embodiment, if the predetermined wind speed range is in vicinity of the rated wind speed and the predetermined power range is in vicinity of the rated power, the first specified clearance value may be a minimum clearance value, or may be another specified clearance value, which is not limited in the present disclosure. The second predetermined range may be from 5m to 8m, or may be another range, which is not limited in the present disclosure. The third predetermined ratio may be equal to 80% or another ratio, which is not limited in the present disclosure. The predetermined angle may be set as required, and is generally greater than a grouping angle. For example, a case that the first specified clearance value is the minimum clearance value, the second predetermined range is from 5m to 8m, the third predetermined ratio is equal to 80% and the predetermined angle is equal to 5 degrees is taken as an example, the pitch angles of all operation data are collected. The pitch angle grouping is performed on the operation data based on each pitch angle interval equal to 1 degree of the pitch angle, and multiple pitch angle intervals are obtained.

Within the interval from a minimum pitch angle to 5 degrees, if minimum clearance values of 80% of the power intervals range from 5m to 8m, a first clearance value flag bit outputs 1; and otherwise, the first clearance value flag bit outputs 0.

In an embodiment of the present disclosure, the method for detecting the clearance abnormality further includes: determining that the clearance value is normal in response to both the first clearance value flag bit and the second clearance value flag bit indicating that the clearance value is normal, otherwise, determining that the low clearance risk of the wind turbine is predicted to occur and outputting the prompt message of immediately calibrating the clearance detection device. According to the embodiment, in a case that both the first clearance value flag bit and the second clearance value flag bit indicate that the clearance value is normal, it is determined that the clearance value is normal. That is, once one clearance value flag bit indicates that the clearance value is abnormal, the clearance detection device is immediately calibrated to ensure that the clearance calibration device can be recalibrated in time.

In an embodiment, when both the first clearance value flag bit and the second clearance value flag bit indicate that the clearance value is normal, it is determined that the clearance value is normal. Only at this case, it is not required to immediately output the prompt message of immediately calibrating the clearance detection device. That is, once any one of the clearance value flag bit indicates that the clearance value is abnormal, the prompt message of immediately calibrating the clearance detection device is outputted, so as to ensure that the clearance calibration device can be recalibrated in time.

In an embodiment of the present disclosure, the acquiring, from the operation data, first operation data when a wind speed is within a predetermined wind speed range and a power is within a predetermined power range includes: acquiring, from the operation data, pieces of second operation data each with a clearance value within a third predetermined range; acquiring a sum of durations of the pieces of the second operation data as a first duration; acquiring a duration from a start time instant to an end time instant of the operation data as a second duration; and acquiring, from the operation data, the first operation data when the wind speed is within the predetermined wind speed range and the power is within the predetermined power range, in response to the first duration and the second duration meeting an integrity condition. According to the embodiment, it is ensured that the operation data collected within the predetermined time period is sufficient, thereby avoiding the amount of the collected operation data is excessively small to cause that the acquired first operation data cannot be well used for subsequent clearance analysis.

In an embodiment, the integrity condition described above may be a ratio of the first duration to the second duration being greater than a first preset threshold. The first preset threshold may be set as required and is not limited in the present disclosure. The third predetermined range may be an open set (0,100), that is, in a case that the clearance value falls within (0,100), it is indicated that the corresponding operation data has a clearance value. In different scenarios, the third predetermined range may be set as required, which is not limited in the present disclosure. It should be noted that after the operation data is acquired, it is determined whether the wind turbine is provided with a clearance detection device or whether the clearance detection device is started, so as to determine in advance whether the acquired operation data is valid. The specific determining manner may be as follows. The clearance value corresponding to each piece of the acquired operation data is identified, where if the clearance value of each piece of the operation data is equal to 100 (the value is set according to different wind turbines), it is indicated that the wind turbine is not provided with the clearance detection device, the clearance detection device is not started, or the clearance detection device is not running. In this case, the content "The clearance detection device is not provided or not started" is outputted. The outputted content may be saved such as in the form of a data table. If any clearance value of the operation data falls within the range from 0 to 100, it is indicated that the clearance detection device is provided and started normally. In this case, the content "The clearance detection device is provided and started normally" is outputted. The outputted content may be saved, such as in the form of a data table.

For example, a case that the integrity condition is the ratio of the first duration to the second duration being greater than the first preset threshold, and the third preset range being the open set (0,100) is taken as an example, a second operation data with the clearance value falling within the open set (0,100) is firstly acquired from the operation data. Then, a duration of each piece of second operation data is acquired. During acquiring the duration of the second operation data, if a duration of a piece of second operation data is more than two times of the average duration of all pieces of second operation data, the average duration of all pieces of second operation data is taken as the duration of the piece of the second operation data. It should be noted that the two times of the average duration may be set to another value as required, which is not limited in the present disclosure. Furthermore, the sum t1 of the durations of all pieces of the second operation data is acquired, the duration t2 from a start time instant to an end time instant of the operation data is acquired simultaneously, and t1/t2 is calculated. In a case that the ratio t1/t2 is greater than the first preset threshold, it is determined that the operation data is complete and the subsequent clearance analysis is performed. In this case, the integrity information of each wind turbine is outputted to the data table to be saved and displayed.

In an embodiment of the present disclosure, the acquiring, from the operation data, first operation data when a wind speed is within a predetermined wind speed range and a power is within a predetermined power range, includes: acquiring, from the operation data, pieces of third operation data under a grid-connected state each with a clearance value greater than a fourth preset value and less than a fifth preset value; acquiring a sum of durations of the pieces of the third operation data as a third duration; acquiring a duration from a start time instant to an end time instant of the operation data as a second duration, where the second operation data is operation data with the clearance value within the third predetermined range; and acquiring, from the operation data, the first operation data when the wind speed is within the predetermined wind speed range and the power is within the predetermined power range, in response to the third duration and the second duration meeting a validity condition. According to the embodiment, it is ensured that the operation data collected within the predetermined time period is valid, thereby preventing the clearance value of the collected operation data from being excessively small or large to cause that the acquired first operation data fails to be used for subsequent clearance analysis.

In an embodiment, the fourth preset value and the fifth preset value may be set as required. For example, the fourth preset value may be set to 0, and the fifth preset value may be set to 20, which is not limited in the present disclosure. The validity condition may be that the ratio of the third duration to the second duration is greater than the second preset threshold. The second preset threshold may be set as required, which is not limited in the present disclosure.

For example, a case that the validity condition is the ratio of the third duration to the second duration being greater than the second preset threshold, the fourth preset value is set to 0, and the fifth preset value is set to 20 is taken as an example. Pieces of third operation data each with a clearance value greater than 0 and less than 20 under the grid-connected state are screened from the operation data. Then the pieces of third operation data are acquired to calculate the durations of the pieces of third operation data. During acquiring the duration of the second operation data, if a duration of a piece of the second operation data is more than two times of the average duration of all pieces of the second operation data, the average duration of all pieces of the second operation data is taken as the duration of the piece of the second operation data. It should be noted that the two times of the average duration may be set to another value as required, which is not limited in the present disclosure. Furthermore, the sum t3 of the durations of all pieces of the third operation data is acquired, the duration t2 from a start time instant to an end time instant of the operation data is acquired, and t3/t2 is calculated. In a case that the ratio t3/t2 is greater than the second preset threshold, it is determined that the acquired operation data is valid and the subsequent clearance analysis is performed. In this case, the integrity information of each wind turbine is outputted to the data table to be saved and displayed.

In step S103, the first operation data is divided into multiple operation data segments. The sampling time for the operation data in the respective operation data segments in this step is continuous, but it is not limited in the present disclosure. For example, each piece of the acquired operation data of the wind turbine within the predetermined time period corresponds to an index value. The operation data may be divided based on whether the index values are continuous, that is, the index values in each obtained operation data segment are continuous.

In an embodiment of the present disclosure, for each operation data segment, a duration from a start time instant to an end time instant of the operation data segment is acquired as a duration of the operation data segment. A predetermined number of operation data segments are merged in response to a sum of durations of the predetermined number of continuous operation data segments being less than a predetermined duration. The operation data segments in the predetermined number are replaced by the merged operation data segment. According to the present embodiment, in a case that a single operation data segment is relatively short, multiple operation data segments are merged to reduce the workload of processing the operation data segments.

In an embodiment, after multiple operation data segments are obtained after dividing, the start time instant and the end time instant of the respective operation data segments are acquired. The duration from the start time instant to the end time instant is the duration of the operation data segment. It should be noted that the operation data segment after dividing may include only one piece of operation data, and the duration of the operation data segment in this case does not exceed 60s. In a case that the durations of the operation data segments before and/or after the operation data segment does not exceed 60s, it is considered to merge the operation data segment with the operation data segments before and/or after the operation data segment to reduce the number of the operation data segments. It should be noted that the above 60s may also be 50s or 70s, which may be set as required, and is not limited in the present disclosure.

In step S104, for each operation data segment, in response to a first specified clearance value in the operation data segment being less than a first preset value and the operation data segment meeting a preset condition, the operation data segment is determined to be a clearance-abnormal segment, where the preset condition is associated with the number of pieces of operation data with a clearance value less than the first preset value in the operation data segment. The first specified clearance value in this step may be the minimum clearance value, or another specified clearance value, which is not limited in the present disclosure. For the first preset value in this step, in a case that the predetermined wind speed range is in vicinity of the rated wind speed and the predetermined power range is in vicinity of the rated power, the first preset value may be set to be 5m, or another value may be selected, which is not limited in the present disclosure. The preset condition in this step may be that the number of pieces of the operation data with a clearance value less than the first preset value in the operation data segment reaches a certain number. The number may be set according to the requirements of users or the total number of pieces of the operation data in the operation data segment, which is not limited in the present disclosure.

For example, the first preset value being 5m and the first specified clearance value being the minimum clearance value are taken as an example. For each operation data segment, if the minimum clearance value in the operation data segment is greater than or equal to 5m, the operation data segment is normal. If the minimum clearance value in the operation data segment is less than 5m, and the operation data segment meets the preset condition, the operation data segment is a clearance-abnormal segment. If the minimum clearance value in the operation data segment is less than 5m, and the operation data segment does not meet the preset condition, the operation data segment is normal.

In an embodiment of the present disclosure, the preset condition may include one of: the number of pieces of operation data with the clearance value less than the first preset value in the operation data segment being greater than a second preset value; and a ratio of the number of pieces of operation data with the clearance value less than the first preset value in the operation data segment to the total number of pieces of the operation data in the operation data segment reaching a first predetermined ratio. According to the embodiment, the preset condition may be determined based a second preset value set as required, or based on the number of pieces of the operation data in each operation data segment, so that the clearance-abnormal segment can be determined accurately based on the preset condition, and the preset condition is set flexibly meanwhile.

In an embodiment, the second preset value may be set as required, for example, it may be set to 10, 9, or 11, which is not limited in the present disclosure. The first predetermined ratio may also be set as required. For example, the first predetermined ratio is equal to 50%, 45%, or 55%, which is not limited in the present disclosure. For example, the preset condition may be that the number of pieces of the operation data with a clearance value less than 5m in the operation data segment is greater than 10, or that the ratio of the number of pieces of the operation data with a clearance value less than 5m in the operation data segment to the total number of pieces of the operation data in the operation data segment reaches 50%.

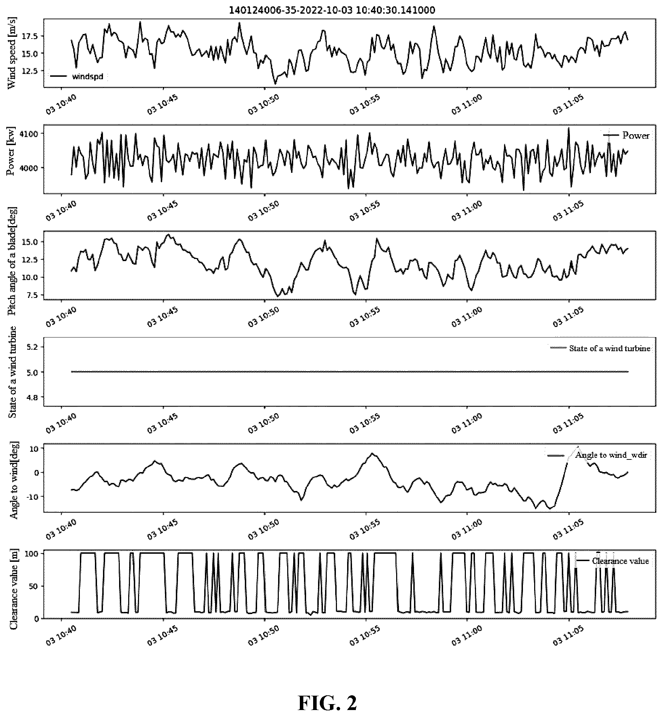

It should be noted that after the clearance-abnormal segment is determined, a timing diagram showing a case from ten minutes before to ten minutes after a clearance-abnormal segment is as shown in FIG. 2, including a wind speed, a power, a pitch angle of each blade of the three blades, an angle to wind, a state of a wind turbine, and a clearance value. Meanwhile, the following content may be outputted in the data table simultaneously: the start time instant and the end time instant of the clearance-abnormal segment, the duration of the clearance-abnormal segment, the number of pieces of the operation data with a clearance value less than 5m, the total number of pieces of the operation data of the clearance-abnormal segment, the minimum clearance value, the maximum clearance value and the mean clearance value of the clearance-abnormal segment, the average wind speed and the average power corresponding to the clearance-abnormal segment, the average pitch angle of three blades and the like. Other data may further be displayed or outputted, which is not limited in the present disclosure. As long as it is the data that the user requires to display and output, so that the user can identify whether it is truly abnormal based on the data, and further verify the clearance-abnormal segment.

In step S105, the clearance abnormality of the wind turbine is determined based on the clearance-abnormal segment. For example, it is determined whether the clearance of the wind turbine is abnormal based on the number of clearance-abnormal segments within a predetermined time period, which is not limited in the present disclosure.

In an embodiment of the present disclosure, the determining the clearance abnormality of the wind turbine based on the clearance-abnormal segment includes: determining the clearance abnormality of the wind turbine in response to the number of the clearance-abnormal segments within the predetermined time period being greater than a third preset value. According to the embodiment, the determination whether the clearance of the wind turbine is abnormal is facilitated based on the number of the clearance-abnormal segments.

In an embodiment, the third preset value may be set as required. For example, the third preset value may be set to 10, or other values, which is not limited in the present disclosure. For example, the third preset value being set to 10 is taken as an example, occurrence times of the clearance-abnormal segment within the predetermined time period may be collected, that is, the number of the clearance-abnormal segments. If the number of the clearance-abnormal segments is greater than 10, the early warning flag bit outputs 1, indicating the clearance abnormality of the wind turbine.

It should be noted that if the method in the present disclosure is built into a model, the clearance abnormality diagnosis model has been built so far. The model may be deployed to an early warning platform for a real-time clearance abnormality diagnosis and early warning. On receiving the early warning information (that is, the warning flag bit outputting 1), the wind turbine takes corresponding protective actions such as increasing the pitch angle, or the personnel checks the risk of tower-striking. Alternatively, the model is used for risk position identification for wind turbine applied to a company, which is not limited in the present disclosure.

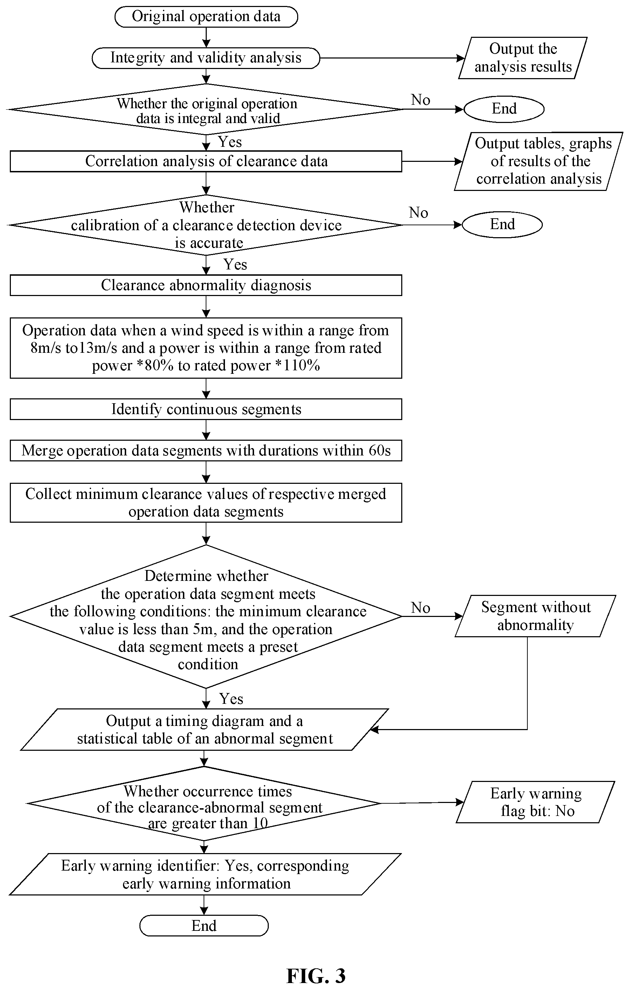

To facilitate understanding of the above embodiments, the following is a systematic explanation in combination with FIG. 3. FIG. 3 is a flowchart showing a complete process of clearance abnormality detection according to one or more embodiments of the present disclosure. As shown in FIG. 3, the original operation data within a predetermined time period is acquired, and integrity and validity analysis is performed based on the clearance value of the original operation data, and then the analysis results are outputted, for example, to a data table. If the original operation data is complete and valid, correlation analysis of the clearance data is performed, otherwise, the detection process ends. For correlation analysis of the clearance data, the specific analysis results may be referred to the above embodiments, which are not discussed here. It is determined whether the calibration of the clearance detection device is accurate based on the analysis results. If the clearance detection device is calibrated accurately, a next step is directly performed, that is, the clearance abnormality diagnosis is performed. If the clearance detection device is calibrated inaccurately, that is, the clearance detection device is calibrated as abnormal, the detection process ends. During the clearance abnormality diagnosis, the operation data with a wind speed in the range from 8m/s to 13m/s and a power in the range from the rated power*80% to the rated power* 110%, that is, the first operation data in the above embodiments, is screened out first from the original operation data. After the first operation data is acquired, continuous segments in the operation data are identified to obtain multiple operation data segments. After multiple operation data segments are obtained, the operation data segments with the durations less than 60s are merged, and the minimum clearance values of the respective merged operation data segments are collected to determine whether the operation data segments meet the following conditions: the minimum clearance value is less than 5m, and the operation data segment meets the preset condition. If the above conditions are met, the operation data segment is a clearance-abnormal segment. The preset condition may be referred to the above embodiments, which will not be discussed here. If the operation data segment is determined to be a clearance-abnormal segment, a timing diagram and a statistical table of the clearance-abnormal segment are outputted. It is determined whether the occurrence times of the clearance-abnormal segment are greater than 10 within the predetermined time period. If the occurrence times are greater than 10, the early warning identifier is outputted as yes and the corresponding early warning information is outputted at the same time; and otherwise, the early warning identifier is outputted as no. In this case, the clearance detection process ends.

In an embodiment of the present disclosure, the method for detecting the clearance abnormality may further includes: for each wind turbine of wind turbines in a wind farm including the wind turbine, acquiring a first clearance predetermined value curve corresponding to the wind turbine based on a clearance predetermined value of the operation data within each power interval, and acquiring a second clearance predetermined value curve corresponding to the wind turbine based on a clearance predetermined value of the operation data within each pitch angle interval, where the clearance predetermined value is the second specified clearance value, the first specified clearance value or a mean clearance value; and determining whether the wind turbine is an outlier based on the first clearance predetermined value curves and/or the second clearance predetermined value curves of all wind turbines. According to the embodiment, the correlation analysis is performed based on the variables such as the clearance value, the power, the pitch angle and the like to determine whether the wind turbine is an outlier.

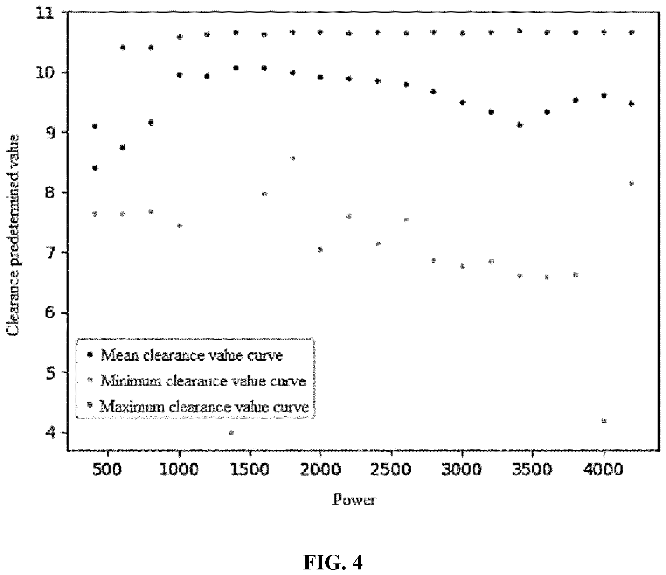

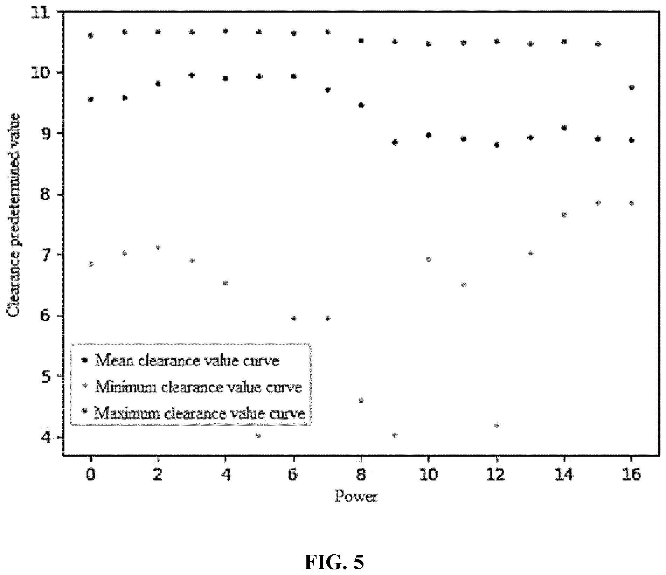

In an embodiment, based on the minimum clearance values, maximum clearance values or mean clearance values of each wind turbine under different power groups and different pitch angle groups according to the above embodiments, it is determined whether the wind turbine is an outlier. The present disclosure is not limited to the minimum clearance value, maximum clearance value or mean clearance value; other related clearance values may also be used. For example, the minimum clearance value, maximum clearance value or mean clearance value is taken as an example, after the power grouping and/or pitch angle grouping, the minimum clearance value curves, the maximum clearance value curves or the mean clearance value curves corresponding to different power groups/different pitch angle groups of the respective wind turbines are acquired. For example, FIG. 4 shows a minimum clearance value curve, a maximum clearance value curve and a mean clearance value curve corresponding to different power groups of a wind turbine. FIG. 5 shows a minimum clearance value curve, a maximum clearance value curve and a mean clearance value curve corresponding to different pitch angle groups of a wind turbine. Any one of the curves may be analyzed to determine whether the wind turbine is an outlier, or the above multiple curves may be analyzed at the same time to determine whether the wind turbine is an outlier, which is not limited in the present disclosure. Any one of the curves may be analyzed using a Local Outlier Factor (LOF) algorithm, as well as other algorithms, which is not limited in the present disclosure.

It should be noted that the outlier of the wind turbine indicates that the corresponding clearance predetermined value curve is different from the clearance predetermined value curves of other wind turbines, but it does not indicate abnormal. Therefore, in general, it is required to pay attention to the wind turbine and check the cause of the outlier. If a wind turbine is determined as an outlier, a low clearance outlier early warning or a high clearance outlier early warning of the wind turbine in the wind farm is triggered based on the outlier identification result. In general, the identified wind turbine as a low clearance outlier may be caused by terrain factors or blade damages, requiring more attention, and otherwise the risk of tower-striking or serious component damage may exist. The identified wind turbine as a high clearance outlier may be related to the installation or calibration of the clearance detection device, which may affect the normal clearance measurement if it is not corrected in time.

In an embodiment of the present disclosure, the determining whether the wind turbine is an outlier based on the first clearance predetermined value curves and/or the second clearance predetermined value curves of all wind turbines includes: for each of the clearance predetermined value curves, determining distances between other wind turbines in the wind farm and the wind turbine based on the clearance predetermined value curves of all wind turbines; and determining whether the wind turbine is the outlier based on the distances between the other wind turbines in the wind farm and the wind turbine. According to the embodiment, the distances between the other wind turbines in the wind farm and the wind turbine are determined based on the clearance predetermined value curves, so that whether the wind turbine is an outlier can be conveniently and rapidly determined based on the distances.

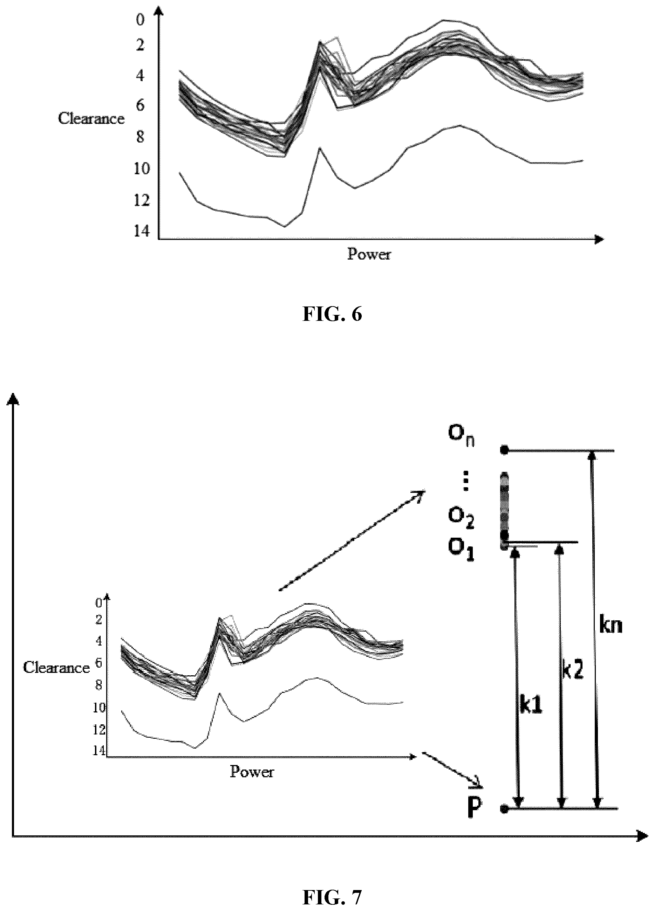

For example, the minimum clearance value curve after the power grouping is taken as an example. FIG. 6 is a schematic diagram showing a minimum clearance curve according to one or more embodiments of the present disclosure. As shown in FIG. 6, the horizontal axis represents the power, and the vertical axis represents the clearance value. The lowest curve is the minimum clearance curve of the wind turbine in the above embodiment, and other curves are the minimum clearance curves of other wind turbines in the wind farm. After the minimum clearance curves for the respective wind turbines in the wind farm are acquired, a distance $K_i$ between any one of the other wind turbines and the wind turbine in the above embodiment is calculated by the following equation:

$$d(x,y) = \sqrt{\sum_{i=1}^{n} (x_i - y_i)^2}$$

where x represents an ordinate of the wind turbine, and y represents an ordinate of other wind turbines. It should be noted that if multiple clearance values exist on a curve, an average value of the clearance values is calculated and taken as an ordinate of a wind turbine corresponding to the curve. As shown in FIG. 7, a point P represents the mean clearance value of the wind turbine, that is, the ordinate of the wind turbine, and point $O_i$ represents the

mean clearance values of other wind turbines, that is, the ordinates of other wind turbines. Alternatively, other manners may further be adopted. Specifically, it is assumed that 3 clearance values exist on a curve, distances corresponding to the 3 clearance values are acquired respectively, and then an average value of the acquired 3 distances is calculated and taken as the distance between the other wind turbines and the wind turbine in the above embodiment, which is not limited in the present disclosure.

After the distances between the other wind turbines and the wind turbine in the above embodiment are obtained, the distances between the other wind turbines are obtained, and a distance set corresponds to the distances is obtained. If the distances corresponding to the wind turbine in the above embodiment do not converge with other distances in the distance set, for example, the distances corresponding to the wind turbine in the above embodiment exceed most distances in the distance set by an excessive amount, the wind turbine in the above embodiment is determined to be an outlier.

In an embodiment of the present disclosure, the determining whether the wind turbine is the outlier based on the distances between the other wind turbines in the wind farm and the wind turbine includes: acquiring an average value of the distances between predetermined wind turbines and the wind turbine, where the predetermined wind turbines are the wind turbines ranked before a predetermined ranking among the other wind turbines sorted according to the distances from the wind turbine; acquiring a local accessible density of the wind turbine based on a correlation data of the average value; and determining whether the wind turbine is the outlier based on the local accessible density of the wind turbine and local accessible densities of the predetermined wind turbines. According to the embodiment, the local accessible densities of the respective wind turbines are further acquired based on the distances between the other wind turbines and the wind turbine. Based on the local accessible densities, it is relatively accurately determined whether the wind turbine is an outlier.

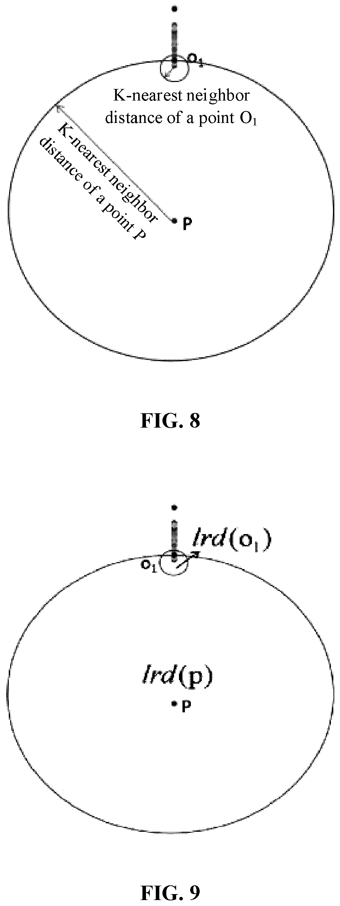

For example, the minimum clearance value curve after the power grouping is taken as an example, the reciprocal of an average accessible distance between point P and neighboring points is first defined as a local accessible density, and the local accessible density is represented by lrd(p). In this case, in order to acquire the local accessible densities of the point P and other point $O_i$, the K-nearest neighbor distance for each point is acquired. The point P is taken as an example, it is assumed that K=3, then the distance between the point P to the third point closest to point P is acquired, that is, the K-nearest neighbor distance of the point P is acquired, which is represented by k-distance(p). As shown in FIG. 8, k-distance($O_1$) represents the K-nearest neighbor distance of the point $O_1$. After k-distance(p) is acquired, as shown in FIG. 9, the local accessible density lrd(p) of the point P is calculated by:

$$lrd(p) = \cfrac{1}{\cfrac{\sum_{i \in K} k - distance\left(p, o_i\right)}{K}}$$

After the local accessible density of the wind turbine in the above embodiment is obtained, that is, the local accessible density of the point P is obtained, the local accessible densities of the predetermined wind turbines in the above embodiment may be obtained in a similar manner. In a case that the local accessible density of the point P is less than the local accessible densities of the predetermined wind turbines by a certain value, it is determined that the wind turbine corresponding to point P is an outlier. Alternatively, the local accessible densities of all other wind turbines may further be acquired. In this case, when the local accessible density of the point P is less than the local accessible densities of all other wind turbines by a certain value, it is determined that the wind turbine corresponding to the point P is an outlier.

In an embodiment of the present disclosure, the determining whether the wind turbine is the outlier based on the local accessible density of the wind turbine and local accessible densities of the predetermined wind turbines includes: acquiring the local accessible densities of the predetermined wind turbines; acquiring a local outlier factor of the wind turbine based on the local accessible density of the wind turbine and the local accessible densities of the predetermined wind turbines; and determining that the wind turbine is the outlier in response to a difference between the local outlier factor and a sixth preset value being greater than a preset threshold. According to the embodiment, on the basis of acquiring the local accessible density, the local outlier factor of the wind turbine is further acquired based on the local accessible density, so that whether the wind turbine is an outlier can be more accurately determined.

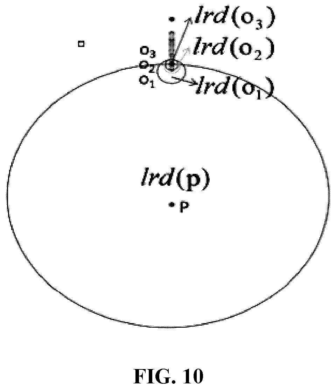

For example, the minimum clearance curve after the power grouping is taken as an example, a ratio of the average local accessible density of the neighboring points of the point P to the local accessible density of the point P is defined as the local outlier factor of the point P, that is, LOF(P). It is assumed that the neighboring points of the point P are $O_1$, $O_2$ and $O_3$, as shown in FIG. 10, the local outlier factor LOF(P) of the point P is calculated by

$$LOF(P) = \frac{lrd(O_1) + lrd(O_2) + lrd(O_3)}{lrd(p)}$$

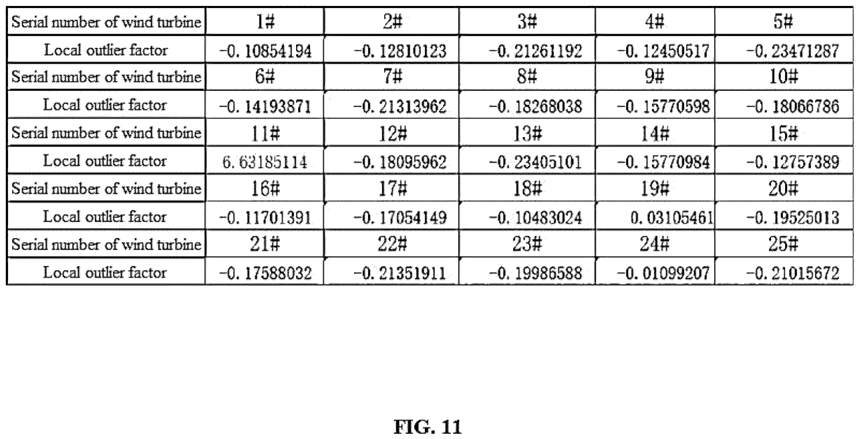

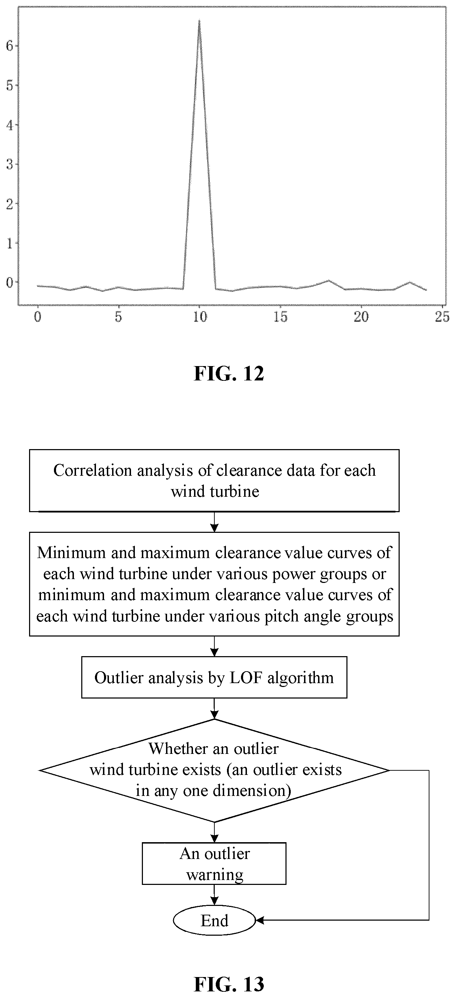

After the local outlier factor LOF(P) of the point P is acquired, LOF(P) being close to 1 indicates that the wind turbine corresponding to the point P is near to wind turbines in the neighboring area of the point P. LOF(P) being less than 1 indicates that the wind turbine corresponding to the point P is in a relatively dense area, and the possibility of outlier is relatively small. LOF(P) being much greater than 1 indicates that the wind turbine corresponding to the point P is far away from other wind turbines, and the possibility of outlier is high, as shown in FIG. 11 and FIG. 12.

To facilitate understanding of the above embodiments, the following is a systematic description in combination with FIG. 13. FIG. 13 is a flowchart of a complete process of outlier identification according to one or more embodiments of the present disclosure. As shown in FIG. 13, the correlation analysis of clearance data is performed on each wind turbine, and the specific description is shown in the above embodiments, which will not be discussed here. After the correlation analysis of clearance data is implemented, the minimum clearance value curve/maximum clearance value curve of each wind turbine under different power groups or the minimum clearance value curve/maximum clearance value curve of the wind turbine under different pitch angle groups is acquired. The outlier analysis is performed by using the LOF algorithm, and then it is determined whether an outlier wind turbine exists based on analysis result. It is determined that there is an outlier wind turbine either through determination based on any one of the curves, or through determination based on multiple curves. If it is determined that there is an outlier wind turbine, an early warning for the outlier is outputted; and if it is determined that there is no outlier wind turbine, the process ends.

In summary, according to the present disclosure, the correlation analysis of the clearance value in the timing data during a time period (that is, the operation data within a predetermined time period) and the key variables is performed, so as to acquire the clearance distribution rule and the clearance change trend. Therefore, the time instant of occurrence of the clearance abnormality is determined, thereby predicting the clearance risk when the clearance abnormality occurs. The model according to the present disclosure may be deployed to the farm cluster monitoring system or other systems that communicate with the wind turbine, so as to perform real-time clearance abnormality diagnosis and farm-level clearance outlier identification. After receiving the early warning information, the wind turbine takes corresponding protective actions such as increasing the pitch angle, or performs a preventive check on large components and clearance devices. The model according to the present disclosure may further be deployed to the early warning platform for clearance abnormality diagnosis and warning of a single wind turbine, as well as, for clearance outlier identification and warning of the farm cluster. After receiving the early warning information, the personnel checks the risk of tower-striking or risk of large components in advance. The model according to the present disclosure may further be deployed to the big data platform for the screening of risk positions of the wind turbines, thereby forming a risk wind turbine ledger including but not limited to a risk working condition, a risk wind turbine and a risk terrain, so as to deploy in advance to prevent risks and avoid greater economic losses.

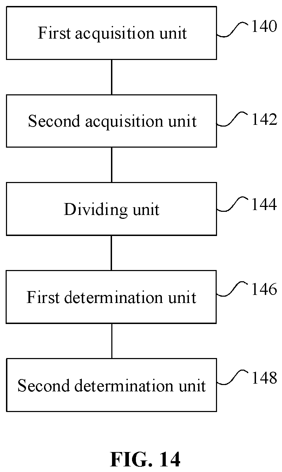

FIG. 14 is a block diagram of an apparatus for detecting a clearance abnormality of a wind turbine according to one or more embodiments of the present disclosure. As shown in FIG. 14, the apparatus includes a first acquisition unit 140, a second acquisition unit 142, a dividing unit 144, a first determination unit 146, and a second determination unit 148.

The first acquisition unit 140 is configured to acquire operation data of a wind turbine within a predetermined time period. The second acquisition unit 142 is configured to acquire, from the operation data, first operation data of when a wind speed is within a predetermined wind speed range and a power is within a predetermined power range. The dividing unit 144 is configured to divide the first operation data into multiple operation data segments. The first determination unit 146 is configured to, with regard to each operation data segment, when a first specified clearance value in the operation data segment is less than a first preset value and the operation data segment meets a preset condition, determine the operation data segment to be a clearance-abnormal segment, where the preset condition is associated with the number of pieces of operation data, which has a clearance value less than the first preset value, in the operation data segment. The second determination unit 148 is configured to determine a clearance abnormality of the wind turbine according to the clearance-abnormal segment.

In an embodiment of the present disclosure, the preset condition includes one of the following. The number of pieces of operation data with the clearance value less than the first preset value in the operation data segment is greater than a second preset value. A ratio of the number of pieces of operation data with the clearance value less than the first preset value in the operation data segment to the number of pieces of the operation data in the operation data segment reaches a first predetermined ratio.

In an embodiment of the present disclosure, the second determination unit 148 is further configured to determine the clearance abnormality of the wind turbine in response to the number of the clearance-abnormal segments within the predetermined time period being greater than a third preset value.

In an embodiment of the present disclosure, the second acquisition unit 142 is further configured to: before the acquiring, from the operation data, first operation data when a wind speed is within a predetermined wind speed range and a power is within a predetermined power range, perform power grouping on the operation data to allocate the operation data to a multiple power intervals and acquire a second specified clearance value of the operation data within each of the multiple power intervals; and in response to a ratio of the number of the power intervals within the predetermined power range with the second specified clearance value within a first predetermined range to the total number of the power intervals within the predetermined power range reaching a second predetermined ratio, determine a first clearance detection device flag bit to indicate that the clearance detection device is calibrated as normal.

In an embodiment of the present disclosure, the second acquisition unit 142 is further configured to: before the acquiring, from the operation data, first operation data when a wind speed is within a predetermined wind speed range and a power is within a predetermined power range, perform angle grouping on the operation data to allocate the operation data to a multiple pitch angle intervals and acquire a second specified clearance value of the operation data within each of the multiple pitch angle intervals; and in response to a ratio of the number of the pitch angle intervals within a range from a minimum pitch angle to a predetermined angle with the second specified clearance value within a first predetermined range to the total number of the pitch angle intervals within the range from the minimum pitch angle to the predetermined angle reaching a second predetermined ratio, determine a second clearance detection device flag bit to indicate that the clearance detection device is calibrated as normal.

In an embodiment of the present disclosure, the second acquisition unit 142 is further configured to determine that the clearance detection device is calibrated as normal in response to both the first clearance detection device flag bit and the second clearance detection device flag bit indicating that the clearance detection device is calibrated as normal.

In an embodiment of the present disclosure, the second acquisition unit 142 is further configured to: acquire, in response to a clearance detection device being calibrated as abnormal, the first specified clearance value of the operation data within each power interval; and in response to a ratio of the number of power intervals within a predetermined power range with the first specified clearance value within a second predetermined range to the total number of power intervals within the predetermined power range reaching a third predetermined ratio, determine a first clearance value flag bit to indicate that the clearance value is normal, and otherwise, determine that a low clearance risk of the wind turbine is predicted to occur and output a prompt message of immediately calibrating the clearance detection device.

In an embodiment of the present disclosure, the second acquisition unit 142 is further configured to: acquire, in response to a clearance detection device being calibrated as abnormal, the first specified clearance value of the operation data within each pitch angle interval; and in response to a ratio of the number of the pitch angle intervals within a range from a minimum pitch angle to a predetermined angle with the first specified clearance value within a second predetermined range to the total number of the pitch angle intervals within the range from the minimum pitch angle to the predetermined angle reaching a third predetermined ratio, determine a second clearance value flag bit to indicate that the clearance value is normal, and otherwise, determine that a low clearance risk of the wind turbine is predicted to occur and output a prompt message of immediately calibrating the clearance detection device.

In an embodiment of the present disclosure, the second acquisition unit 142 is further configured to determine that the clearance value is normal in response to both the first clearance value flag bit and the second clearance value flag bit indicating that the clearance value is normal; and otherwise, determine that the low clearance risk of the wind turbine is predicted to occur and output the prompt message of immediately calibrating the clearance detection device.

In an embodiment of the present disclosure, the second acquisition unit 142 is further configured to acquire, from the operation data, pieces of second operation data each with a clearance value within a third predetermined range; acquire a sum of durations of the pieces of second operation data as a first duration; acquire a duration from a start time instant to an end time instant of the operation data as a second duration; and acquire, from the operation data, the first operation data when the wind speed is within the predetermined wind speed range and the power is within the predetermined power range, in response to the first duration and the second duration meeting an integrity condition.

In an embodiment of the present disclosure, the second acquisition unit 142 is further configured to acquire, from the operation data, pieces of third operation data under a grid-connected state each with a clearance value greater than a fourth preset value and less than a fifth preset value; acquire a sum of durations of the pieces of third operation data as a third duration; acquire a duration from a start time instant to an end time instant of the operation data as a second duration, where the second operation data is operation data with the clearance value within the third predetermined range; and acquire, from the operation data, the first operation data when the wind speed is within the predetermined wind speed range and the power is within the predetermined power range, in response to the third duration and the second duration meeting a validity condition.

In an embodiment of the present disclosure, the dividing unit 144 is further configured to acquire, for each operation data segment, a duration from a start time instant to an end time instant of the operation data segment as a duration of the operation data segment; and merge a predetermined number of the operation data segments in response to a sum of durations of the predetermined number of continuous operation data segments being less than a predetermined duration, and replace the operation data segments in the predetermined number with the merged operation data segment.

In an embodiment of the present disclosure, the outlier determination unit is configured to: for each wind turbine of wind turbines in a wind farm including the wind turbine, acquire a first clearance predetermined value curve corresponding to the wind turbine based on a clearance predetermined value of the operation data within each power interval, and acquire a second clearance predetermined value curve corresponding to the wind turbine based on a clearance predetermined value of the operation data within each pitch angle interval, where the clearance predetermined value is the second specified clearance value, the first specified clearance value or a mean clearance value; and determine whether the wind turbine is an outlier based on the first clearance predetermined value curves and/or the second clearance predetermined value curves of all wind turbines.

In an embodiment of the present disclosure, the outlier determination unit is further configured to: for each of the clearance predetermined value curves, determine distances between other wind turbines in the wind farm and the wind turbine based on the clearance predetermined value curves of all wind turbines; and determine whether the wind turbine is the outlier based on the distances between the other wind turbines in the wind farm and the wind turbine.

In an embodiment of the present disclosure, the outlier determination unit is further configured to: acquire an average value of the distances between predetermined wind turbines and the wind turbine, where the predetermined wind turbines are the wind turbines ranked before a predetermined ranking among the other wind turbines sorted according to the distances from the wind turbine; acquire a local accessible density of the wind turbine based on correlation data of the average value; and determine whether the wind turbine is the outlier based on the local accessible density of the wind turbine and local accessible densities of the predetermined wind turbines.

In an embodiment of the present disclosure, the outlier determination unit is further configured to acquire the local accessible densities of the predetermined wind turbines; acquire a local outlier factor of the wind turbine based on the local accessible density of the wind turbine and the local accessible densities of the predetermined wind turbines, and determine that the wind turbine is the outlier in response to a difference between the local outlier factor and a sixth preset value being greater than a preset threshold.

In an embodiment of the present disclosure, a computer-readable storage medium for storing instructions is provided. The instructions, when being executed by at least one computing apparatus, cause the at least one computing apparatus to perform the method for detecting the clearance abnormality of the wind turbine according to any one of the embodiments described above.

In an embodiment of the present disclosure, a system, including at least one computing apparatus and at least one storage apparatus for storing instructions, is provided. The instructions, when being executed by the at least one computing apparatus, cause the at least one computing apparatus to perform the method for detecting the clearance abnormality of the wind turbine according to any one of the embodiments described above.

In another aspect, a wind turbine is provided. The wind turbine includes the apparatus for detecting the clearance abnormality of the wind turbine described above.

Although some embodiments of the present disclosure have been illustrated and described, those skilled in the art should understand that modifications can be made to these embodiments without departing from the principles and spirit of the present disclosure, which are defined by the claims and equivalents thereof.

## Claims

1. A method for detecting a clearance abnormality of a wind turbine, comprising:

    acquiring operation data of the wind turbine within a predetermined time period;
    acquiring, from the operation data, first operation data when a wind speed is within a predetermined wind speed range and a power is within a predetermined power range;
    dividing the first operation data into a plurality of operation data segments;
    for each operation data segment of the plurality of operation data segments, in response to a first specified clearance value in the operation data segment being less than a first preset value and the operation data segment meeting a preset condition, determining the operation data segment to be a clearance-abnormal segment, wherein the preset condition is associated with the number of pieces of operation data with a clearance value less than the first preset value in the operation data segment; and
    determining the clearance abnormality of the wind turbine based on the clearance-abnormal segment.

2. The method according to claim 1, wherein the preset condition comprises one of:

    the number of pieces of operation data with the clearance value less than the first preset value in the operation data segment being greater than a second preset value; and
    a ratio of the number of pieces of operation data with the clearance value less than the first preset value in the operation data segment to the total number of pieces of the operation data in the operation data segment reaching a first predetermined ratio.

3. The method according to claim 1, wherein the determining the clearance abnormality of the wind turbine based on the clearance-abnormal segment comprises:

    determining the clearance abnormality of the wind turbine in response to the number of the clearance-abnormal segments within the predetermined time period being greater than a third preset value.

4. The method according to claim 1, wherein before the acquiring, from the operation data, first operation data when a wind speed is within a predetermined wind speed range and a power is within a predetermined power range, the method further comprises:

    performing power grouping on the operation data to allocate the operation data to a plurality of power intervals and acquiring a second specified clearance value of the operation data within each of the plurality of power intervals; and
    in response to a ratio of the number of the power intervals within the predetermined power range with the second specified clearance value within a first predetermined range to the total number of the power intervals within the predetermined power range reaching a second predetermined ratio, determining a first clearance detection device flag bit to indicate that a clearance detection device is calibrated as normal.

5. The method according to claim 1, wherein before the acquiring, from the operation data, first operation data when a wind speed is within a predetermined wind speed range and a power is within a predetermined power range, the method further comprises:

    performing angle grouping on the operation data to allocate the operation data to a plurality of pitch angle intervals and acquiring a second specified clearance value of the operation data within each of the plurality of pitch angle intervals; and
    in response to a ratio of the number of the pitch angle intervals within a range from a minimum pitch angle to a predetermined angle with the second specified clearance value within a first predetermined range to the total number of the pitch angle intervals within the range from the minimum pitch angle to the predetermined angle reaching a second predetermined ratio, determining a second clearance detection device flag bit to indicate that a clearance detection device is calibrated as normal.

6. The method according to claim 4 or claim 5, further comprising:
    determining that the clearance detection device is calibrated as normal in response to both the first clearance detection device flag bit and the second clearance detection device flag bit indicating that the clearance detection device is calibrated as normal.

7. The method according to claim 1, further comprising:

acquiring, in response to a clearance detection device being calibrated as abnormal, the first specified clearance value of the operation data within each power interval; and
in response to a ratio of the number of power intervals within a predetermined power range with the first specified clearance value within a second predetermined range to the total number of power intervals within the predetermined power range reaching a third predetermined ratio, determining a first clearance value flag bit to indicate that the clearance value is normal, and otherwise, determining that a low clearance risk of the wind turbine is predicted to occur and outputting a prompt message of immediately calibrating the clearance detection device.

8. The method according to claim 1, further comprising:

acquiring, in response to a clearance detection device being calibrated as abnormal, the first specified clearance value of the operation data within each pitch angle interval; and
in response to a ratio of the number of the pitch angle intervals within a range from a minimum pitch angle to a predetermined angle with the first specified clearance value within a second predetermined range to the total number of the pitch angle intervals within the range from the minimum pitch angle to the predetermined angle reaching a third predetermined ratio, determining a second clearance value flag bit to indicate that the clearance value is normal, and otherwise, determining that a low clearance risk of the wind turbine is predicted to occur and outputting a prompt message of immediately calibrating the clearance detection device.

9. The method according to claim 7 or claim 8, further comprising:
determining that the clearance value is normal in response to both the first clearance value flag bit and the second clearance value flag bit indicating that the clearance value is normal, otherwise, determining that the low clearance risk of the wind turbine is predicted to occur and outputting the prompt message of immediately calibrating the clearance detection device.

10. The method according to claim 1, wherein the acquiring, from the operation data, first operation data when a wind speed is within a predetermined wind speed range and a power is within a predetermined power range, comprises:

acquiring, from the operation data, pieces of second operation data each with a clearance value within a third predetermined range;
acquiring a sum of durations of the pieces of second operation data as a first duration;
acquiring a duration from a start time instant to an end time instant of the operation data as a second duration; and
acquiring, from the operation data, the first operation data when the wind speed is within the predetermined wind speed range and the power is within the predetermined power range, in response to the first duration and the second duration meeting an integrity condition.

11. The method according to claim 1, wherein the acquiring, from the operation data, first operation data when a wind speed is within a predetermined wind speed range and a power is within a predetermined power range, comprises:

acquiring, from the operation data, pieces of third operation data under a grid-connected state each with a clearance value greater than a fourth preset value and less than a fifth preset value;
acquiring a sum of durations of the pieces of the third operation data as a third duration;
acquiring a duration from a start time instant to an end time instant of the operation data as a second duration; and
acquiring, from the operation data, the first operation data when the wind speed is within the predetermined wind speed range and the power is within the predetermined power range, in response to the third duration and the second duration meeting a validity condition.

12. The method according to claim 1, further comprising:

acquiring, for each operation data segment, a duration from a start time instant to an end time instant of the operation data segment as a duration of the operation data segment; and
merging a predetermined number of the operation data segments in response to a sum of durations of the predetermined number of continuous operation data segments being less than a predetermined duration, and replacing the operation data segments in the predetermined number with the merged operation data segment.

13. The method according to claim 6, further comprising:

for each wind turbine of wind turbines in a wind farm comprising the wind turbine, acquiring a first clearance predetermined value curve corresponding to the wind turbine based on a clearance predetermined value of the operation data within each power interval, and acquiring a second clearance predetermined value curve corresponding to the wind turbine based on a clearance predetermined value of the operation data within each pitch angle interval, wherein the clearance predetermined value is the second specified clearance value, the first specified clearance value or a mean clearance value; and determining whether the wind turbine is an outlier based on the first clearance predetermined value curves and/or the second clearance predetermined value curves of all the wind turbines.

14. The method according to claim 13, wherein the determining whether the wind turbine is an outlier based on the first clearance predetermined value curves and/or the second clearance predetermined value curves of all the wind turbines comprises:

for each of the clearance predetermined value curves, determining distances between other wind turbines in the wind farm and the wind turbine based on the clearance predetermined value curves of all the wind turbines; and determining whether the wind turbine is the outlier based on the distances between the other wind turbines in the wind farm and the wind turbine.

15. The method according to claim 14, wherein the determining whether the wind turbine is the outlier based on the distances between the other wind turbines in the wind farm and the wind turbine comprises:

acquiring an average value of the distances between predetermined wind turbines and the wind turbine, wherein the predetermined wind turbines are the wind turbines ranked before a predetermined ranking among the other wind turbines sorted according to the distances from the wind turbine; acquiring a local accessible density of the wind turbine based on correlation data of the average value; and determining whether the wind turbine is the outlier based on the local accessible density of the wind turbine and local accessible densities of the predetermined wind turbines.

16. The method according to claim 15, wherein the determining whether the wind turbine is the outlier based on the local accessible density of the wind turbine and local accessible densities of the predetermined wind turbines comprises:

acquiring the local accessible densities of the predetermined wind turbines; acquiring a local outlier factor of the wind turbine based on the local accessible density of the wind turbine and the local accessible densities of the predetermined wind turbines; and determining that the wind turbine is the outlier in response to a difference between the local outlier factor and a sixth preset value being greater than a preset threshold.

17. An apparatus for detecting a clearance abnormality of a wind turbine, comprising:

a first acquisition unit, configured to acquire operation data of the wind turbine within a predetermined time period; a second acquisition unit, configured to acquire, from the operation data, first operation data when a wind speed is within a predetermined wind speed range and a power is within a predetermined power range; a dividing unit, configured to divide the first operation data into a plurality of operation data segments; a first determination unit, configured to, for each operation data segment of the plurality of operation data segments, in response to a first specified clearance value in the operation data segment being less than a first preset value and the operation data segment meeting a preset condition, determine the operation data segment to be a clearance-abnormal segment, wherein the preset condition is associated with the number of pieces of operation data with a clearance value less than the first preset value in the operation data segment; and a second determination unit, configured to determine the clearance abnormality of the wind turbine based on the clearance-abnormal segment.

18. A computer-readable storage medium for storing instructions, wherein the instructions, when being executed by at least one computing apparatus, cause the at least one computing apparatus to perform the method for detecting the clearance abnormality of the wind turbine according to any one of claims 1 to 16.

19. A system, comprising at least one computing apparatus and at least one storage apparatus for storing instructions, wherein the instructions, when being executed by the at least one computing apparatus, cause the at least one computing apparatus to perform the method for detecting the clearance abnormality of the wind turbine according to any one of claims 1 to 16.

20. A wind turbine, comprising the apparatus for detecting the clearance abnormality according to claim 17.

Acquire operation data of a wind turbine within a predetermined time period — S101

Acquire, from the operation data, first operation data when a wind speed is within a predetermined wind speed range and a power is within a predetermined power range — S102

Divide the first operation data into multiple operation data segments — S103

For each operation data segment of the multiple operation data segments, in response to a first specified clearance value in the operation data segment being less than a first preset value and the operation data segment meeting a preset condition, determine the operation data segment to be a clearance-abnormal segment, where the preset condition is associated with the number of pieces of operation data with a clearance value less than the first preset value in the operation data segment — S104

Determine a clearance abnormality of the wind turbine based on the clearance-abnormal segment — S105

**FIG. 1**

**FIG. 2**

```
              ┌─────────────────────────────┐
              │   Original operation data   │
              └─────────────────────────────┘
                            │
              ┌─────────────────────────────┐        ┌──────────────────┐
              │ Integrity and validity analysis│─────▶│   Output the     │
              └─────────────────────────────┘        │ analysis results │
                            │                        └──────────────────┘
                    ╱───────────────╲
                  ╱ Whether the original╲      No     ┌──────┐
                 ╲  operation data is    ╱────────────▶│ End  │
                  ╲ integral and valid  ╱             └──────┘
                    ╲───────────────╱
                            │ Yes
              ┌─────────────────────────────┐        ┌──────────────────┐
              │ Correlation analysis of      │───────▶│ Output tables,   │
              │ clearance data               │        │ graphs of results│
              └─────────────────────────────┘        │ of the correlation│
                            │                        │ analysis         │
                    ╱───────────────╲               └──────────────────┘
                  ╱     Whether       ╲
                 ╱ calibration of a     ╲    No       ┌──────┐
                 ╲ clearance detection  ╱────────────▶│ End  │
                  ╲ device is accurate ╱             └──────┘
                    ╲───────────────╱
                            │ Yes
              ┌─────────────────────────────┐
              │ Clearance abnormality diagnosis│
              └─────────────────────────────┘
                            │
              ┌─────────────────────────────┐
              │ Operation data when a wind   │
              │ speed is within a range from │
              │ 8m/s to13m/s and a power is  │
              │ within a range from rated    │
              │ power *80% to rated power *110%│
              └─────────────────────────────┘
                            │
              ┌─────────────────────────────┐
              │ Identify continuous segments │
              └─────────────────────────────┘
                            │
              ┌─────────────────────────────┐
              │ Merge operation data segments│
              │ with durations within 60s    │
              └─────────────────────────────┘
                            │
              ┌─────────────────────────────┐
              │ Collect minimum clearance    │
              │ values of respective merged  │
              │ operation data segments      │
              └─────────────────────────────┘
                            │
                    ╱───────────────╲
                  ╱ Determine whether  ╲
                 ╱ the operation data    ╲
                ╱ segment meets the       ╲  No       ┌──────────────────┐
                ╲ following conditions: the╱──────────▶│ Segment without  │
                 ╲minimum clearance value ╱            │ abnormality      │
                  ╲is less than 5m...    ╱             └──────────────────┘
                    ╲───────────────╱                          │
                            │ Yes                              │
              ┌─────────────────────────────┐                 │
              │ Output a timing diagram and a│◀────────────────┘
              │ statistical table of an      │
              │ abnormal segment             │
              └─────────────────────────────┘
                            │
                    ╱───────────────╲
                  ╱ Whether occurrence╲
                 ╱ times of the        ╲   No       ┌──────────────────┐
                 ╲ clearance-abnormal  ╱────────────▶│ Early warning    │
                  ╲ segment are greater╱             │ flag bit: No     │
                   ╲ than 10          ╱              └──────────────────┘
                    ╲───────────────╱
                            │
              ┌─────────────────────────────┐
              │ Early warning identifier:    │
              │ Yes, corresponding early     │
              │ warning information          │
              └─────────────────────────────┘
                            │
                       ┌──────┐
                       │ End  │
                       └──────┘
```

**FIG. 3**

**FIG. 4**

**FIG. 5**

**FIG. 6**

**FIG. 7**

**FIG. 8**

**FIG. 9**

**FIG. 10**

| Serial number of wind turbine | 1# | 2# | 3# | 4# | 5# |
|---|---|---|---|---|---|
| Local outlier factor | −0.10854194 | −0.12810123 | −0.21261192 | −0.12450517 | −0.23471287 |
| Serial number of wind turbine | 6# | 7# | 8# | 9# | 10# |
| Local outlier factor | −0.14193871 | −0.21313962 | −0.18268038 | −0.15770598 | −0.18066786 |
| Serial number of wind turbine | 11# | 12# | 13# | 14# | 15# |
| Local outlier factor | 6.63185114 | −0.18095962 | −0.23405101 | −0.15770984 | −0.12757389 |
| Serial number of wind turbine | 16# | 17# | 18# | 19# | 20# |
| Local outlier factor | −0.11701391 | −0.17054149 | −0.10483024 | 0.03105461 | −0.19525013 |
| Serial number of wind turbine | 21# | 22# | 23# | 24# | 25# |
| Local outlier factor | −0.17588032 | −0.21351911 | −0.19986588 | −0.01099207 | −0.21015672 |

**FIG. 11**

**FIG. 12**

Correlation analysis of clearance data for each wind turbine

↓

Minimum and maximum clearance value curves of each wind turbine under various power groups or minimum and maximum clearance value curves of each wind turbine under various pitch angle groups

↓

Outlier analysis by LOF algorithm

↓

Whether an outlier wind turbine exists (an outlier exists in any one dimension)

↓

An outlier warning

↓

End

**FIG. 13**

First acquisition unit ⟿ 140

Second acquisition unit ⟿ 142

Dividing unit ⟿ 144

First determination unit ⟿ 146

Second determination unit ⟿ 148

**FIG. 14**

## INTERNATIONAL SEARCH REPORT

| International application No. |
| --- |
| **PCT/CN2023/109556** |

### A. CLASSIFICATION OF SUBJECT MATTER

F03D17/00(2016.01)i

According to International Patent Classification (IPC) or to both national classification and IPC

### B. FIELDS SEARCHED

Minimum documentation searched (classification system followed by classification symbols)

IPC:F03D

Documentation searched other than minimum documentation to the extent that such documents are included in the fields searched

Electronic data base consulted during the international search (name of data base and, where practicable, search terms used)

CNTXT; VCN; VEN; DWPI; CNKI: 风力, 发电, 净空, 预知, 预报, 预测, 分, 分段, 片段, wind, power, detect+, devide, division, separat+, segment

### C. DOCUMENTS CONSIDERED TO BE RELEVANT

| Category* | Citation of document, with indication, where appropriate, of the relevant passages | Relevant to claim No. |
| --- | --- | --- |
| PX | CN 116292133 A (BEIJING GOLDWIND SCIENCE & CREATION WINDPOWER EQUIPMENT CO., LTD.) 23 June 2023 (2023-06-23)<br>claims 1-20 | 1-20 |
| A | CN 114692481 A (XINJIANG GOLDWIND SCIENCE & TECHNOLOGY CO., LTD.) 01 July 2022 (2022-07-01)<br>description, paragraphs 38-225, and figures 1-14 | 1-20 |
| A | CN 110886679 A (MINGYANG SMART ENERGY GROUP CO., LTD.) 17 March 2020 (2020-03-17)<br>entire document | 1-20 |
| A | CN 112901426 A (CHINA HUANENG CLEAN ENERGY RESEARCH INSTITUTE) 04 June 2021 (2021-06-04)<br>entire document | 1-20 |
| A | CN 108087210 A (BEIJING GOLDWIND SCIENCE & CREATION WINDPOWER EQUIPMENT CO., LTD.) 29 May 2018 (2018-05-29)<br>entire document | 1-20 |

☑ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **07 October 2023** | **26 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/109556** |

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | CN 111433455 A (NIDEC SSB WIND SYSTEMS GMBH) 17 July 2020 (2020-07-17) entire document | 1-20 |

Form PCT/ISA/210 (second sheet) (July 2022)

**INTERNATIONAL SEARCH REPORT**
Information on patent family members

International application No.

**PCT/CN2023/109556**

| Patent document cited in search report | | | Publication date (day/month/year) | Patent family member(s) | | | Publication date (day/month/year) |
|---|---|---|---|---|---|---|---|
| CN | 116292133 | A | 23 June 2023 | None | | | |
| CN | 114692481 | A | 01 July 2022 | None | | | |
| CN | 110886679 | A | 17 March 2020 | None | | | |
| CN | 112901426 | A | 04 June 2021 | None | | | |
| CN | 108087210 | A | 29 May 2018 | None | | | |
| CN | 111433455 | A | 17 July 2020 | US | 2020309092 | A1 | 01 October 2020 |
| | | | | US | 11506175 | B2 | 22 November 2022 |
| | | | | WO | 2019110624 | A1 | 13 June 2019 |
| | | | | EP | 3721082 | A1 | 14 October 2020 |
| | | | | EP | 3721082 | B1 | 25 January 2023 |
| | | | | JP | 2021505808 | A | 18 February 2021 |
| | | | | JP | 7175981 | B2 | 21 November 2022 |

Form PCT/ISA/210 (patent family annex) (July 2022)

**EP 4 571 105 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211734407